# EUROPEAN PATENT APPLICATION

(11) **EP 4 561 044 A1**
(43) Date of publication of application: **28.05.2025**
(21) Application number: 23948668.1
(22) Date of filing: 28.09.2023
(51) Int. Cl.: H04M 11/00

(54) **ABNORMALITY DETECTION SYSTEM, ABNORMALITY DETECTION METHOD, AND PROGRAM**

(71) Applicant: Rakuten Group, Inc., Setagaya-ku Tokyo 158-0094 (JP)
(72) Inventor: FUJIOKA, Kengo, Tokyo 158-0094 (JP); FUJII, Taisuke, Tokyo 158-0094 (JP); NISHIMURA, Ryo, Tokyo 158-0094 (JP); HASEGAWA, Daichi, Tokyo 158-0094 (JP)
(74) Representative: EIP
(86) International application number: PCT/JP2023/035440
(87) International publication number: WO 2025/069316

(57) **Abstract**

An inquiry data acquisition module (101) of an anomaly detection system (1) acquires inquiry data relating to an inquiry made by each of a plurality of users who use a service. An anomaly detection module (102) detects an anomaly relating to the service based on the inquiry data.

## Description

### Technical Field

The present disclosure relates to an anomaly detection system, an anomaly detection method, and a program.

### Background Art

Hitherto, a technology for detecting an anomaly relating to a service used by a user has been investigated. For example, in Patent Literature 1, there is described an anomaly detection system which sets a monitoring rule for monitoring an operation state of a server computer based on a usage history of a web service. The anomaly detection system as described in Patent Literature 1 sets the monitoring rule in accordance with the usage history of the web service, to thereby achieve an increase in a monitoring accuracy of the web service and an increase in quality of service and a reduction in operation cost of the web service.

### Citation List

### Patent Literature

[PTL 1] JP 2013-030071 A

### Summary of Invention

### Technical Problem

However, information useful for the anomaly detection is not always included in the usage history, and hence even when the anomaly detection system as described in Patent Literature 1 sets the monitoring rule based on the usage history, the accuracy of the anomaly detection cannot sufficiently be increased. In this respect, it is considered that when an inquiry made by each of a plurality of users who use the service can be used for the anomaly detection in the service, the accuracy of the anomaly detection can be increased. However, related arts including the technology as described in Patent Literature 1 do not make such a use.

One object of the present disclosure is to increase an accuracy of anomaly detection.

### Solution to Problem

An anomaly detection system according to one embodiment of the present disclosure includes: an inquiry data acquisition module configured to acquire inquiry data relating to an inquiry made by each of a plurality of users who use a service; and an anomaly detection module configured to detect an anomaly relating to the service based on the inquiry data.

### Advantageous Effects of Invention

According to the present disclosure, the accuracy of the anomaly detection can be increased.

### Brief Description of Drawings

FIG. 1 is a diagram for illustrating an example of a hardware configuration of an anomaly detection system.
FIG. 2 is a view for illustrating an example of an inquiry page.
FIG. 3 is a graph for showing an example of a time-series change in the number of accesses to the inquiry pages.
FIG. 4 is a view for illustrating an example of a notification displayed on an administrator terminal.
FIG. 5 is a diagram for illustrating an example of functions implemented in the anomaly detection system.
FIG. 6 is a table for showing an example of an inquiry database.
FIG. 7 is a flowchart for illustrating an example of processing executed in the anomaly detection system.
FIG. 8 is a diagram for illustrating an example of functions implemented in an anomaly detection system in modification examples.

### Description of Embodiments

### [1. Hardware Configuration of Anomaly Detection System]

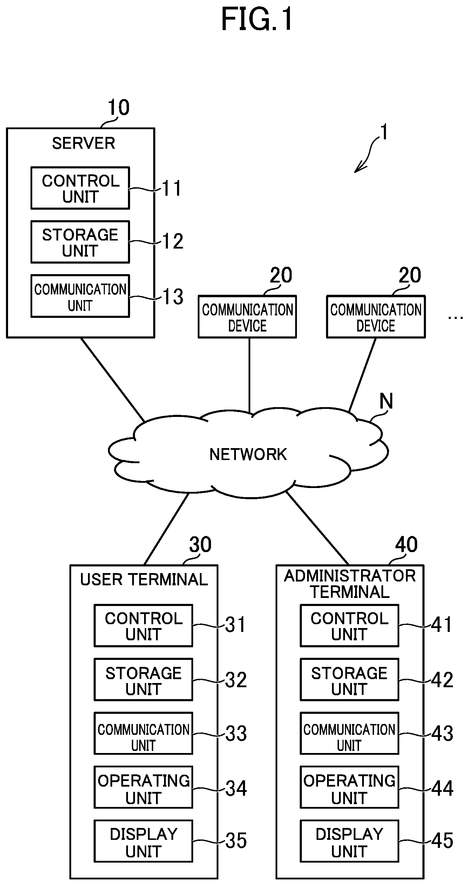

Description is now given of an example of an embodiment of an anomaly detection system, an anomaly detection method, and a program according to the present disclosure. FIG. 1 is a diagram for illustrating an example of a hardware configuration of the anomaly detection system. For example, an anomaly detection system 1 includes a server 10, a communication device 20, a user terminal 30, and an administrator terminal 40. Each of the server 10, the communication device 20, the user terminal 30, and the administrator terminal 40 can be connected to a network N. The network N is, for example, the Internet, a public communication line, or a LAN.

The server 10 is a server computer. In this embodiment, a case in which a telecommunications carrier manages the server 10 is exemplified. For example, the server 10 includes a control unit 11, a storage unit 12, and a communication unit 13. The control unit 11 includes at least one processor. The storage unit 12 includes at least one of a volatile memory such as a RAM or a nonvolatile memory such as a flash memory. The communication unit 13 includes at least one of a communication interface for wired communication or a communication interface for wireless communication.

The communication device 20 is a device which communicates to and from another device. For example, the communication device 20 is a device managed by the telecommunications carrier. The communication device 20 may be a device for wireless communication or a device for wired communication. The communication device 20 relays at least one of call or data communication by a user. For example, the communication device 20 is a base station of a public communication line, a private branch exchange, an access point of a wireless LAN, a router, a hub, a repeater, a modem, or a server computer used in a virtualization technology. The communication device 20 may be a device of a telecommunications carrier which provides a full virtualization cloud-native mobile network to the user.

The user terminal 30 is a computer of the user. For example, the user terminal 30 is a smartphone, a tablet computer, a personal computer, or a wearable terminal. For example, the user terminal 30 includes a control unit 31, a storage unit 32, a communication unit 33, an operation unit 34, and a display unit 35. Hardware configurations of the control unit 31, the storage unit 32, and the communication unit 33 may be the same as those of the control unit 11, the storage unit 12, and the communication unit 13, respectively. The operation unit 34 is an input device, such as a touch panel or a mouse. The display unit 35 is a display, such as a liquid crystal display or an organic EL display.

The administrator terminal 40 is a computer of an administrator which manages a service being a target of anomaly detection. In this embodiment, a communication service provided by the telecommunications carrier is described as an example of the service. The service may be any service, and is not limited to the communication service. For example, the service may be an electronic commerce service, a travel reservation service, an online flea market service, a financial service, a payment service, a video distribution service, or another service.

For example, the administrator terminal 40 is a smartphone, a tablet computer, a personal computer, or a wearable terminal. For example, the administrator terminal 40 includes a control unit 41, a storage unit 42, a communication unit 43, an operation unit 44, and a display unit 45. Hardware configurations of the control unit 41, the storage unit 42, the communication unit 43, the operation unit 44, and the display unit 45 may be the same as those of the control unit 11, the storage unit 12, the communication unit 13, the operation unit 34, and the display unit 35, respectively.

Programs stored in the storage units 12, 32, and 42 may be supplied to each computer via the network N. Moreover, each computer may include at least one of a reading unit (for example, a memory card slot) for reading a computer-readable information storage medium or an input/output unit (for example, a USB port) for inputting/outputting data from/to an external device. For example, a program stored in an information storage medium may be supplied to each computer via at least one of the reading unit or the input/output unit.

Moreover, the anomaly detection system 1 is only required to include at least one computer. The computer included in the anomaly detection system 1 is not limited to the example of FIG. 1. For example, the anomaly detection system 1 may include only the server 10. In this case, each of the communication device 20, the user terminal 30, and the administrator terminal 40 exists outside the anomaly detection system 1. The anomaly detection system 1 may include only the server 10 and the administrator terminal 40. In this case, each of the communication device 20 and the user terminal 30 exists outside the anomaly detection system 1. The anomaly detection system 1 may include another computer not shown in FIG. 1.

### [2. Overview of Anomaly Detection System]

In this embodiment, a case in which the communication device 20 is a server computer which has a containerized network function (CNF) is exemplified. Further, a case in which the user terminal 30 is a smartphone is exemplified. The communication device 20 relays the communication of a large number of user terminals 30. For example, when a communication amount to be processed by the communication device 20 reaches a communication amount that can be processed by this communication device 20, the anomaly possibly occurs in the service. The communication amount can be expressed by a publicly-known index such as bps.

For example, when the anomaly occurs in the service, the administrator identifies the communication device 20 relating to the anomaly, to thereby execute recovery work. It is conceivable to detect the anomaly when the communication amount processed by the communication device 20 becomes a threshold value or more, there is a case in which the communication device 20 can process a communication amount larger than an upper limit value defined by the administrator. There is also a case in which the communication device 20 can process only a communication amount smaller than the upper limit value defined by the administrator. There is also a case in which the administrator itself does not know the upper limit value of the communication device 20. Thus, even when the communication amount of the communication device 20 reaches a certain amount, this case does not always correspond to the anomaly. This point applies to other services. Even when the administrator monitors only the state of the communication device 20, it is difficult to detect the occurrence of the anomaly.

Thus, in this embodiment, the server 10 detects the anomaly in the service based on inquiry data relating to an inquiry of the user made to the service. The inquiry data is data indicating at least one of a situation of the inquiry or content of the inquiry. The situation of the inquiry is the number of inquiries, a change amount of the number of inquiries, an inquiry frequency, or a combination thereof. The content of the inquiry is specific content of the inquiry made by the user.

In this embodiment, as an example of the inquiry data, access situation data relating to an access situation of the user to an inquiry page is described. The inquiry page is a page on which an answer to the inquiry relating to the service is written. The inquiry page is also sometimes referred to as "help page." The inquiry page may be a web site displayed on a browser or a page displayed on an application specific to the service. For example, when the anomaly occurs in the service, the user operates the user terminal 30 to make access to the inquiry page.

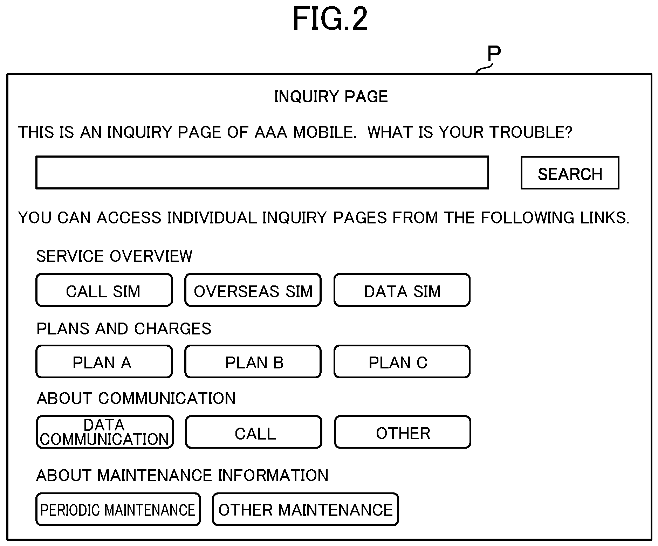

FIG. 2 is a view for illustrating an example of the inquiry page. In this embodiment, a case in which the server 10 provides an inquiry page P to the user terminal 30 is exemplified, but a computer other than the server 10 may provide the inquiry page to the user terminal 30. The server 10 is only required to be capable of acquiring the inquiry data exemplified by the access situation data. The computer which generates the inquiry data may be another computer other than the server 10.

For example, the server 10 manages a plurality of inquiry pages P. On each inquiry page P, answers to at least one of inquiries simulated in advance by the administrator or inquiries made in the past are written. In the example of FIG. 2, the inquiry page P includes an input form for the user to input keywords. When the user inputs any keyword to the input form, the server 10 searches for inquiry pages P that hit the keyword out of a plurality of inquiry pages P. The user can select any inquiry page P from search results of the server 10. The server 10 may manage only one inquiry page P. That is, the number of inquiry pages P may be only one.

For example, the user can select a link displayed on the inquiry page P to move to another inquiry page P even without inputting the keyword. The inquiry page P itself is only required to be a page employed in a publicly-known service. The inquiry page P is not limited to the example in this embodiment. For example, the inquiry page P may be a page including content called frequently asked questions (FAQs), a page on which an inquiry can be made through use of a chat, or other pages. When the anomaly occurs in the service, a large number of users sometimes access the inquiry pages P. In this case, the number of accesses to the inquiry pages P increases.

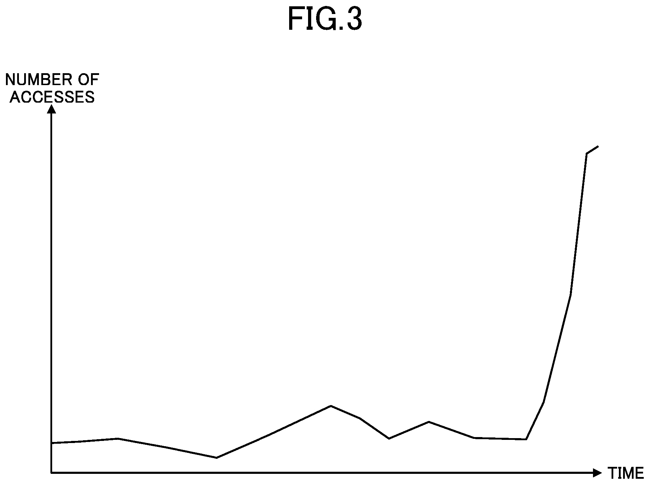

FIG. 3 is a graph for showing an example of a time-series change in the number of accesses to the inquiry pages P. The horizontal axis of FIG. 3 is a time axis. A right end of the time axis of FIG. 3 indicates a current time point. The vertical axis of FIG. 3 is an axis indicating the number of accesses to the inquiry pages P. In the example of FIG. 3, the number of accesses to the inquiry pages P has rapidly increased recently. In this case, there is a possibility that a large number of users are accessing the inquiry pages P because a certain anomaly has occurred in the service. When the server 10 detects an increase in the number of accesses to the inquiry pages P, the server 10 transmits, to the administrator terminal 40, a notification of prompting checking of a state of the communication device 20.

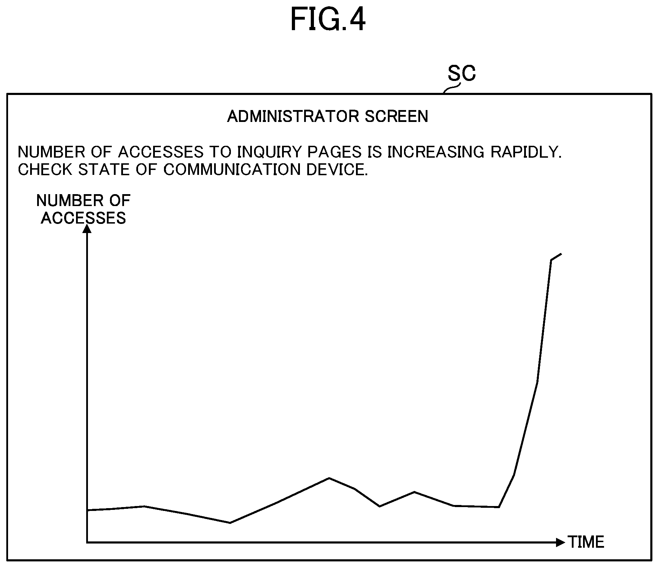

FIG. 4 is a view for illustrating an example of the notification displayed on the administrator terminal 40. For example, when the administrator terminal 40 receives the notification from the server 10, the administrator terminal 40 displays an administrator screen SC indicating a time-series change in the number of accesses to the inquiry pages P on the display unit 45. When the plurality of inquiry pages P exist as in this embodiment, the number of accesses to each inquiry page P or the number of accesses in each category of the inquiry pages may be displayed on the administrator screen SC. The administrator checks the administrator screen SC to perform maintenance of the communication device 20. The maintenance itself of the communication device 20 may be executed through a publicly-known method.

As described above, the anomaly detection system 1 detects the anomaly in the service based on the number of accesses to the inquiry pages P. Even when an anomaly that cannot be detected by a usual algorithm for anomaly detection occurs, the anomaly detection system 1 can notify the administrator of a possibility of anomaly occurrence from the time-series change of the number of accesses to the inquiry pages P. Even when the anomaly that cannot be detected by a usual algorithm for anomaly detection occurs, the administrator can notice the anomaly occurrence by checking the state of the communication device 20. Details of the anomaly detection system 1 are now described.

### [3. Functions Implemented in Anomaly Detection System]

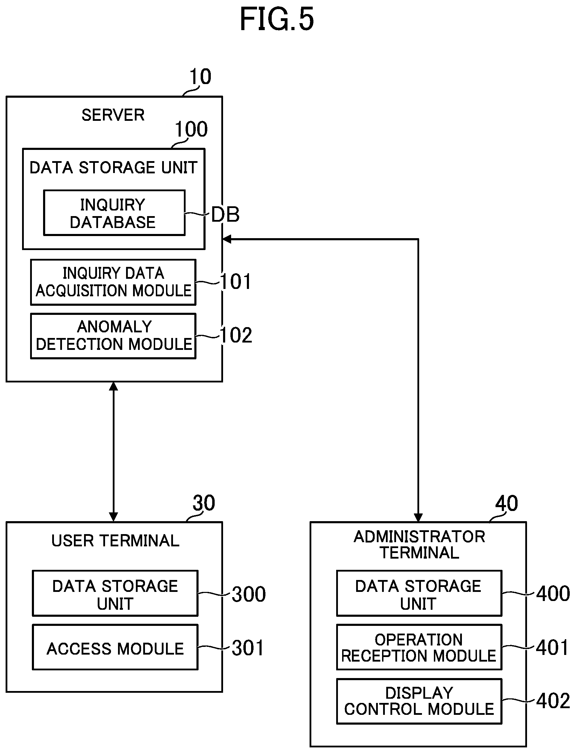

FIG. 5 is a diagram for illustrating an example of functions implemented in the anomaly detection system 1. Functions of the communication device 20 are the same as functions in a publicly-known service, and are thus omitted in FIG. 5.

### [3-1. Functions Implemented in Server]

For example, the server 10 includes a data storage unit 100, an inquiry data acquisition module 101, and an anomaly detection module 102. The data storage unit 100 is implemented by the storage unit 12. Each of the inquiry data acquisition module 101 and the anomaly detection module 102 is implemented by the control unit 11.

### [Data Storage Unit]

The data storage unit 100 stores data required for the anomaly detection. For example, the data storage unit 100 stores an inquiry database DB.

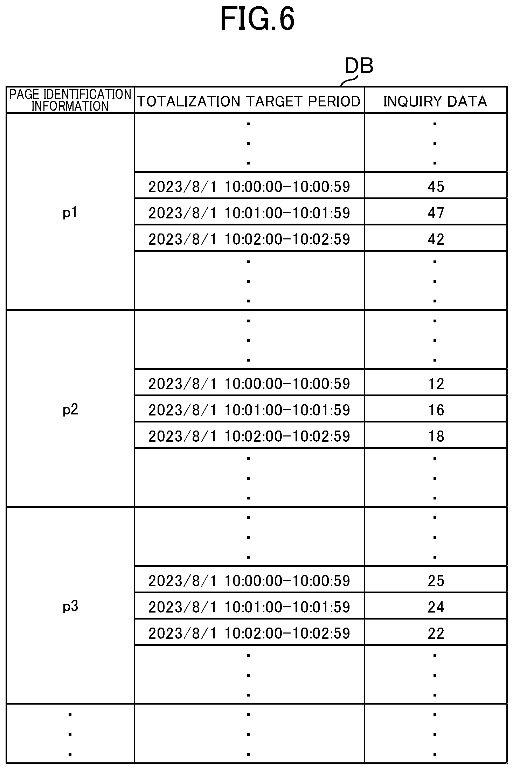

FIG. 6 is a table for showing an example of the inquiry database DB. The inquiry database DB is a database in which the inquiry data is stored. In this embodiment, the access situation data corresponds to the inquiry data, and the access situation data is stored as the inquiry data in the inquiry database. An example of the inquiry data other than the access situation is described later in modification examples.

For example, in the inquiry database DB, page identification information which allows identification of each of the plurality of inquiry pages P, a totalization target period, and the access situation data being the example of the inquiry data are associated with one another. In the inquiry database DB, any data relating to the inquiries of the users may be stored. For example, in the inquiry database DB, the change amount of the number of accesses to the inquiry pages P and an index (for example, a viewing time) other than the number of accesses to the inquiry pages P may be stored.

In the example of FIG. 6, a case in which a subdirectory in the URL of the inquiry page P corresponds to the page identification information is exemplified. The page identification information is only required to be information which allows identification of the inquiry page P. For example, the page identification information may be a title (page name) of the inquiry page P, an ID assigned to the inquiry page P, or other information. The totalization target period is a temporal section for calculating the number of accesses. The number of accesses is calculated for each totalization target period. The totalization target period may have any length. For example, the totalization target period is 30 seconds, 1 minute, 5 minutes, 10 minutes, 30 minutes, 1 hour, or another length. The length of the totalization target period may vary depending on the time period or the day of the week.

The access situation data indicates the number of accesses in the totalization target period. For example, when the server 10 receives the access to a certain inquiry page P in a certain totalization target period, the server 10 increments the number of accesses indicated by the access situation data associated with this totalization target period and this inquiry page P. The number of accesses is only required to be an index used in general access analysis. For example, a page view or the number of sessions may be used as the number of accesses. The access situation data may be acquired through a general method of access analysis.

The data stored in the data storage unit 100 is not limited to the above-mentioned example. The data storage unit 100 can store any data relating to the anomaly detection. For example, the data storage unit 100 stores various types of threshold values referred to at the time of the anomaly detection, a program required for processing of the anomaly detection, or other data.

### [Inquiry Data Acquisition Module]

The inquiry data acquisition module 101 acquires the inquiry data relating to the inquiry made by each of a plurality of users who use the service. In this embodiment, the inquiry data acquisition module 101 acquires, as the inquiry data, the access situation data relating to the access situation of each of the plurality of users to the inquiry page of the service.

In this embodiment, the inquiry data acquisition module 101 refers to the inquiry database DB to acquire the inquiry data. For example, the inquiry data acquisition module 101 acquires the inquiry data in the totalization target period (for example, the newest totalization target period or a plurality of the latest totalization target periods) being a target of the anomaly detection. The inquiry data acquisition module 101 may acquire the inquiry data independently of the totalization target period. The inquiry data acquisition module 101 may acquire each of the plurality of pieces of inquiry data from another computer other than the server 10 or an information storage medium.

In this embodiment, the inquiry data acquisition module 101 acquires the access situation data relating to the access situation to the server 10 which is a server different from the communication device 20 which provides the service to each of the plurality of user, and provides the inquiry pages P to each of the plurality of users. The server 10 and the communication device 20 are computers physically different from each other. Thus, the computer which provides the service and the computer which receives the inquiries are different from each other. In this embodiment, a case in which the administrator which manages the server 10 and the administrator which manages the communication device 20 are the same is exemplified, but those administrators may be different from each other.

The communication device 20 is an example of a service provision server. Thus, "communication device 20" as used herein can be read as "service provision server." The service provision server may be a server computer other than the communication device 20. For example, the service provision server is a server computer which the user terminal 30 accesses. The service provision server may be a server computer which a computer other than the user terminal 30 accesses when the user uses the service.

The server 10 is an example of a page provision server. Thus, "server 10" as used herein can be read as "page provision server." The page provision server may be a server computer other than the server 10. For example, the inquiry page P may be provided to the user by each of a plurality of server computers. That is, the server computer which manages a certain inquiry page P and the server computer which manages another inquiry page P may be different from each other. The service provision server and the page provision server may be the same as each other.

### [Anomaly Detection Module]

The anomaly detection module 102 detects the anomaly relating to the service based on the inquiry data. In this embodiment, an anomaly detection criterion being a criterion for the anomaly detection is provided. For example, when the inquiry data is expressed in a numerical value, the anomaly detection criterion indicates a threshold value considered as the anomaly. For example, the anomaly detection module 102 detects the anomaly when the value indicated by the inquiry data is equal to or larger than the threshold value being the anomaly detection criterion. It is only required that the anomaly detection criterion be defined in accordance with the inquiry data. The anomaly detection module 102 may detect the anomaly when the numerical value indicated by the inquiry data is smaller than the threshold value being the anomaly detection criterion depending on the content indicated by the inquiry data.

In this embodiment, a case in which the access situation data corresponds to an example of the inquiry data is exemplified. The anomaly detection module 102 detects the anomaly based on the access situation data. For example, the anomaly detection module 102 detects the anomaly when the number of accesses indicated by the access situation data is equal to or larger than the threshold value. The anomaly detection module 102 does not detect the anomaly when the number of accesses indicated by the access situation data is smaller than the threshold value.

When the plurality of inquiry pages P exist as in this embodiment, the anomaly detection module 102 calculates a sum of the numbers of accesses each indicated by the access situation data of each of the plurality of inquiry pages P. The sum may be a simple sum, or may be calculated based on weighting coefficients. The anomaly detection module 102 detects the anomaly when the sum of the numbers of accesses is equal to or larger than a threshold value. The anomaly detection module 102 does not detect the anomaly when the sum of the numbers of accesses is smaller than the threshold value.

When the totalization target period is determined as in this embodiment, the anomaly detection module 102 may detect the anomaly based on the access situation data in each of a plurality of totalization target periods. For example, the anomaly detection module 102 detects the anomaly based on a time-series change in the number of accesses indicated by the access situation data in each of the plurality of totalization target periods. The anomaly detection module 102 calculates a change amount (increase amount) between the number of accesses in a certain totalization target period and the number of accesses in the next totalization target period. The anomaly detection module 102 detects the anomaly when the change amount is equal to or larger than a threshold value. The anomaly detection module 102 does not detect the anomaly when the change amount is smaller than the threshold value. The anomaly detection module 102 may calculate the change amount across three or more totalization target periods, to thereby detect the anomaly.

The methods for the anomaly detection module 102 to detect the anomaly are not limited to the above-mentioned example. For example, the anomaly detection module 102 may detect the anomaly based on a learning model using a method of machine learning. In this case, the learning model has learned training data indicating a relationship between inquiry data for training and presence or absence of an anomaly. The learning model may be any one method of supervised learning, semi-supervised learning, and unsupervised learning. The anomaly detection module 102 inputs the inquiry data (inquiry data for estimation) being the target of the anomaly detection to the learning model. The learning model calculates a feature amount of the input inquiry data, and outputs the presence or absence of the anomaly corresponding to the feature amount. The anomaly detection module 102 acquires the output from the learning model, to thereby detect the anomaly.

### [3-2. Functions Implemented in User Terminal]

For example, the user terminal 30 includes a data storage unit 300 and an access module 301. The data storage unit 300 is implemented by the storage unit 32. The access module 301 is implemented by the control unit 31.

### [Data Storage Unit]

The data storage unit 300 stores data required for the users to use the service and data required for the users to make the inquiries. For example, the data storage unit 300 stores a browser or an application dedicated to the service. The data storage unit 300 may store data required by the user to use at least one of the plurality of services.

### [Access Module]

The access module 301 accesses the inquiry page P based on the operation of the user. It is only required that the access to the inquiry page P be made through a publicly-known method such as an HTTP request. The access module 301 displays the inquiry page P on the display unit 35 based on data on the inquiry page P received from the server 10.

### [3-3. Functions Implemented in Administrator Terminal]

For example, the administrator terminal 40 includes a data storage unit 400, an operation reception module 401, and a display control module 402. The data storage unit 400 is implemented by the storage unit 42. The operation reception module 401 and the display control module 402 are implemented by the control unit 41.

### [Data Storage Unit]

The data storage unit 400 stores data required for a task of the administrator. For example, the data storage unit 400 stores data required to display an administrator screen SC. The data storage unit 400 may store a maintenance tool required for the task of the administrator. The maintenance tool itself may be a publicly-known tool, and, for example, is only required to be a tool capable of monitoring a state of at least one of the hardware or the software.

### [Operation Reception Module]

The operation reception module 401 receives various operations by the administrator. For example, the operation reception module 401 receives the operation on the administrator screen SC.

### [Display Control Module]

The display control module 402 displays various screens on the display unit 45. For example, the display control module 402 displays the administrator screen SC on the display unit 45.

### [4. Processing Executed in Anomaly Detection System]

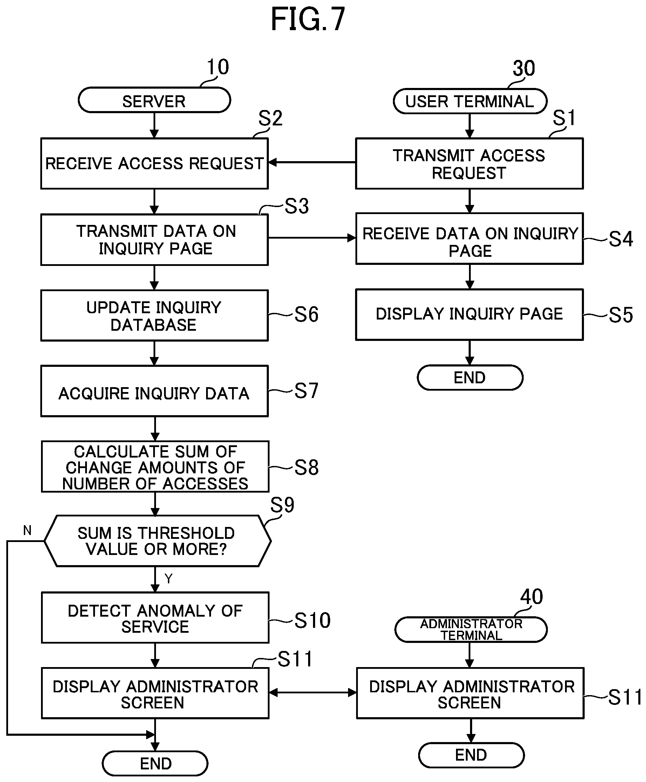

FIG. 7 is a flowchart for illustrating an example of processing executed in the anomaly detection system 1. The processing of FIG. 7 is executed by the control units 11, 31, and 41 executing programs stored in the storage units 12, 32, and 42, respectively. Processing of each step of FIG. 7 is an example of a step included in the anomaly detection method according to the present disclosure. Each time the access to the inquiry page P is made, the processing steps of Step S1 to Step S6 are executed. Each time a determination timing (for example, an end timing of the totalization target period or a timing specified by the administrator) for the anomaly detection arrives, the processing steps of Step S7 to Step S11 are executed. It is assumed that the determination timing for the anomaly detection repeatedly arrives periodically or non-periodically.

As illustrated in FIG. 7, when the user specifies the URL of the inquiry page P on a browser, the user terminal 30 transmits to the server 10 an access request for the inquiry page P (Step S1). When the server 10 receives the access request from the user terminal 30 (Step S2), the server 10 transmits to the user terminal 30 the data on the inquiry page P (Step S3). When the user terminal 30 receives from the server 10 the data on the inquiry page P (Step S4), the user terminal 30 displays the inquiry page P on the display unit 35 (Step S5). The server 10 updates the inquiry database DB such that the number of accesses to the inquiry page P in the totalization target period to which the current time point belongs increases (Step S6).

When the determination timing for the presence or absence of the anomaly arrives, the server 10 acquires the inquiry data in each of the plurality of totalization target periods based on the inquiry database DB (Step S7). The server 10 calculates the sum of the change amounts of the number of accesses to the inquiry pages P based on the inquiry data acquired in Step S7 (Step S8). The server 10 determines whether or not the sum calculated in Step S8 is equal to or larger than the threshold value (Step S9). When the sum is determined to be equal to or larger than the threshold value in Step S9 (Y in Step S9), the server 10 detects the anomaly of the service (Step S10). The server 10 executes, between the server 10 and the administrator terminal 40, the processing of displaying the administrator screen SC (Step S11), and this processing is ended. When the change amount is determined to be smaller than the threshold value in Step S9 (N in Step S9), the server 10 does not detect the anomaly of the service, and this processing is ended.

### [5. Summary of Embodiment]

The anomaly detection system 1 according to this embodiment acquires the inquiry data relating to the inquiry made by each of the plurality of users who uses the service. The server 10 detects the anomaly relating to the service based on the inquiry data. Even when an anomaly that cannot be detected by a usual algorithm for anomaly detection occurs, the anomaly detection system 1 can detect the anomaly based on the inquiry data, and hence can increase the accuracy of the anomaly detection. Even when an anomaly that cannot be detected by a usual algorithm for anomaly detection occurs, the anomaly detection system 1 can quickly detect the anomaly. For example, when the anomaly detection system 1 detects the anomaly based on the inquiry data, the anomaly detection system 1 can notify the administrator to prompt the administrator to check the state of the communication device 20. Even when an unknown anomaly that has not occurred yet occurs, the administrator possibly notices the anomaly.

Moreover, the anomaly detection system 1 acquires, as the inquiry data, the access situation data relating to the access situation of each of the plurality of users to the inquiry pages **P.** The anomaly detection system 1 detects the anomaly based on the access situation data. When the anomaly occurs in the service, it is conceivable that the user who feels a sense of discomfort accesses the inquiry page P for the moment. The anomaly detection system 1 can increase the accuracy of the anomaly detection by analyzing such an action of the user. The anomaly detection system 1 can quickly detect the anomaly by analyzing such an action of the user. For example, the anomaly detection system 1 can detect the anomaly based on the access situation data being data which can easily be acquired (for example, data which can be acquired through a publicly-known access analysis technology), and hence it becomes easier to build a mechanism for the anomaly detection.

Further, the anomaly detection system 1 acquires the access situation data relating to the access situation to the server 10 which is a server different from the communication device 20 which provides the service to each of the plurality of users, and provides the inquiry pages P to each of the plurality of users. The anomaly detection system 1 can detect the anomaly by analyzing not the state of the communication device 20 which directly provides the service to the user, but the state of the server 10 which does not directly provide the service to the user but executes the user support such as the inquiry. The anomaly detection system 1 can detect the anomaly which cannot be detected from the state of the communication device 20 which directly provides the service to the user.

### [6. Modification Examples]

The present disclosure is not limited to the above-mentioned embodiment. The present disclosure may appropriately be modified without departing from the purport of the present disclosure.

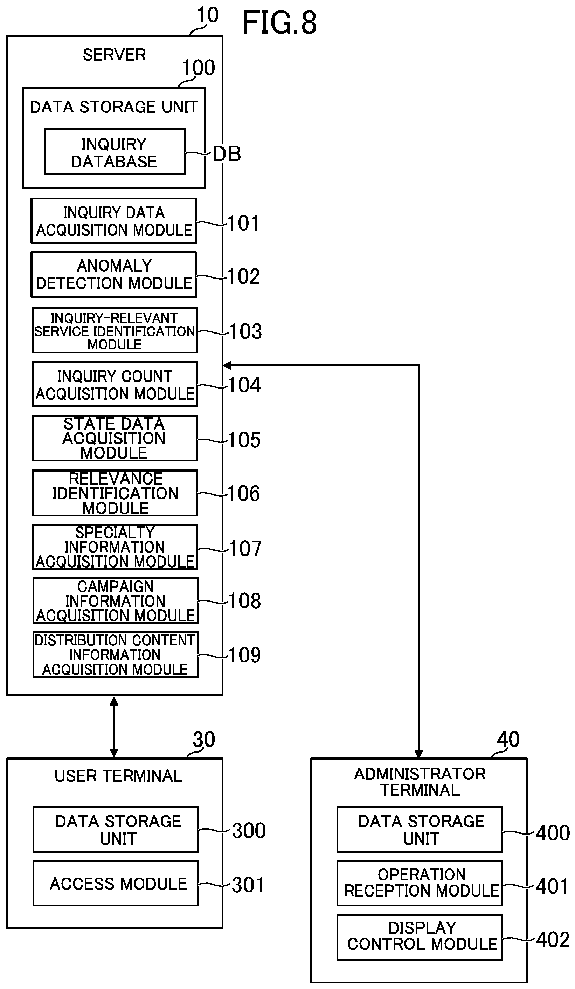

FIG. 8 is a diagram for illustrating an example of functions implemented in an anomaly detection system 1 in modification examples. The anomaly detection system 1 in the modification examples includes an inquiry-relevant service identification module 103, an inquiry count acquisition module 104, a state data acquisition module 105, a relevance identification module 106, a specialty information acquisition module 107, a campaign information acquisition module 108, and a distribution content information acquisition module 109. The inquiry-relevant service identification module 103, the inquiry count acquisition module 104, the state data acquisition module 105, the relevance identification module 106, the specialty information acquisition module 107, the campaign information acquisition module 108, and the distribution content information acquisition module 109 are implemented by the control unit 11.

### [6-1. Modification Example 1]

For example, the server 10 manages various inquiry pages P. Thus, inquiry pages P which are greatly relevant to the anomaly of the service and inquiry pages P which are not greatly relevant to the anomaly of the service are sometimes simultaneously exist. The numbers of accesses to the plurality of inquiry pages P are not simply (equally) added, but the index for the anomaly detection may be calculated based on a calculation expression having weighting coefficients defined in accordance with the inquiry pages P. The inquiry data acquisition module 101 in Modification Example 1 acquires the access situation data on each of the plurality of inquiry pages P as in the embodiment.

The anomaly detection module 102 in Modification Example 1 calculates the index relating to the anomaly detection based on the access situation data on each of the plurality of inquiry pages P and a calculation expression in which a coefficient for the inquiry page P relatively relevant to the anomaly detection is higher than a coefficient for the inquiry page P relatively irrelevant to the anomaly detection, and detects the anomaly based on this index. It is assumed that the calculation expression is stored in the data storage unit 100. The calculation expression may be written in a program for anomaly detection.

The inquiry page P relatively relevant to the anomaly detection is a page including content relating to the anomaly. For example, a page relating to troubleshooting corresponds to the inquiry page P relevant to the anomaly detection. A page in which guidance to a call center being an inquiry destination at the time of the anomaly occurrence is written corresponds to the inquiry page P relevant to the anomaly detection. It is assumed that information indicating whether or not the inquiry page P is the inquiry page P relatively relevant to the anomaly detection is stored in the data storage unit 100. The server 10 can identify, based on this information, an inquiry page P relatively relevant to the anomaly detection. It is assumed that information indicating the inquiry page P relatively relevant to the anomaly detection is stored in the data storage unit 100. The server 10 identifies, based on this information, the inquiry page P relatively relevant to the anomaly detection. This information may be a numerical value indicating a level (for example, three or more levels of relevance) of the relevance to the anomaly detection.

The inquiry page P relatively irrelevant to the anomaly detection is a page other than the inquiry pages P relatively relevant to the anomaly detection. For example, the inquiry page P relatively irrelevant to the anomaly detection is a page not including content relating to the anomaly. For example, a page which guides a beginner of the service to content of the service corresponds to the inquiry page P relatively irrelevant to the anomaly detection. A page which provides guidance to a charge plan of the service corresponds to the inquiry page P relatively irrelevant to the anomaly detection. It is assumed that information indicating the inquiry page P relatively irrelevant to the anomaly detection is stored in the data storage unit 100. The server 10 identifies, based on this information, the inquiry page P relatively irrelevant to the anomaly detection.

For example, the number of accesses indicated by the access information data on each of the plurality of inquiry pages P is assigned to the calculation expression in Modification Example 1. In the calculation expression, a coefficient is set for each inquiry page P. As the inquiry page P is more relevant to the anomaly detection, the coefficient for this inquiry page P increases. As the inquiry page P is less relevant to the anomaly detection, the coefficient for this inquiry page P decreases. The anomaly detection module 102 may identify the level of the relevance of the inquiry page P based on the above-mentioned information. The anomaly detection module 102 assigns the number of accesses indicated by the access information data on each of the plurality of inquiry pages P to the calculation expression, to thereby calculate the index for the anomaly detection. This index is a level of suspicion of the anomaly. As the index is higher, the suspicion of the anomaly is higher. As the index is lower, the suspicion of the anomaly is lower.

For example, the anomaly detection module 102 detects the anomaly when the index for the anomaly detection is equal to or larger than a threshold value. The anomaly detection module 102 does not detect the anomaly when the index for the anomaly detection is smaller than the threshold value. The anomaly detection module 102 may assign not the number of accesses indicated by the access information data on each of the plurality of inquiry pages P, but a change amount of the number of accesses to the calculation expression. The calculation method for the change amount is as described in the embodiment. The anomaly detection module 102 may assign a change amount across three or more totalization target periods to the calculation expression in Modification Example 1, to thereby calculate the index for the anomaly detection.

The anomaly detection system 1 in Modification Example 1 calculates the index relating to the anomaly detection based on the access situation data on each of the plurality of inquiry pages and the calculation expression in which the coefficient for the inquiry page relatively relevant to the anomaly detection is higher than the coefficient for the inquiry page P relatively irrelevant to the anomaly detection, and detects the anomaly based on this index. With this configuration, the anomaly detection system 1 comes to be able to detect the anomaly in consideration of the relevance of each inquiry page P to the anomaly detection, and hence the accuracy of the anomaly detection can be further increased. For example, when the number of accesses to an inquiry page P for beginners (an example of the inquiry page P relatively irrelevant to the anomaly detection) increases due to a new membership campaign, the anomaly detection system 1 can prevent erroneous detection of the anomaly. The anomaly detection system 1 can more accurately detect the anomaly through use of such an index which considers more the numbers of accesses to the inquiry pages P particularly relevant to the anomaly detection.

### [6-2. Modification Example 2]

For example, in the embodiment, the case in which the access situation data corresponds to the inquiry data has been exemplified, but it is only required that the inquiry data be data relating to the inquiry made by the user. The inquiry data is not limited to the access situation data. In Modification Example 2, another example of the inquiry data is described. The inquiry data acquisition module 101 in Modification Example 2 acquires, as the inquiry data, keyword data relating to a keyword input by each of the plurality of users in a search on the inquiry page P of the service.

For example, when the server 10 receives the keyword data from the user terminal 30, the server 10 stores this keyword data in the inquiry database DB. In Modification Example 2, a case in which the keyword data is stored for each totalization target period in the inquiry database DB is exemplified, but the keyword data may be stored in the inquiry database DB not particularly dependently on the totalization target period. It is assumed that indices referred to in the search on the inquiry page P are stored in the data storage unit 100. The server 10 executes the search on the inquiry page P based on the keyword data and the index of the inquiry page P. The search on the inquiry page P can use a publicly-known search engine.

The anomaly detection module 102 in Modification Example 2 detects the anomaly based on the keyword data. For example, the data storage unit 100 stores a dictionary database in which words relating to the anomaly are stored. The dictionary database may be created by the administrator, or may be created by another person. For example, words such as "cannot access," "cannot connect," and "system down" are stored in the dictionary database. The anomaly detection module 102 calculates, based on the keyword data, a hit count which is the number of hits to the words of the dictionary database. The anomaly detection module 102 may calculate the hit count for each totalization target period. The anomaly detection module 102 detects the anomaly when the hit count is equal to or larger than a threshold value. The anomaly detection module 102 does not detect the anomaly when the hit count is smaller than the threshold value.

The method for the anomaly detection module 102 to detect the anomaly based on the keyword data is not limited to the above-mentioned example. For example, the anomaly detection module 102 may not use the dictionary database, but may execute sentiment analysis on the keyword data, and may detect the anomaly based on an execution result of the sentiment analysis. The sentiment analysis itself may be a publicly-known method. The anomaly detection module 102 uses the sentiment analysis to calculate a negative keyword count being the number of negative keywords. The anomaly detection module 102 detects the anomaly when the negative keyword count is equal to or larger than a threshold value. The anomaly detection module 102 does not detect the anomaly when the negative keyword count is smaller than the threshold value. As another example, the anomaly detection module 102 inputs the keyword data to a learning model which has learned a relationship between a keyword for training and presence or absence of an anomaly, and may detect the anomaly based on an estimation result obtained by the learning model.

The anomaly detection system 1 in Modification Example 1 acquires, as the inquiry data, the keyword data relating to the keyword input by each of the plurality of users in the search on the inquiry page of the service. The anomaly detection system 1 detects the anomaly based on the keyword data. The keyword input by the user directly reflects an opinion of the user, and hence the anomaly detection system 1 can use the keyword data to further increase the accuracy of the anomaly detection even when the anomaly that cannot be detected by a usual algorithm for anomaly detection occurs. For example, even when a keyword relating to an inquiry having content which is not prepared as the inquiry page P is input, the anomaly detection system 1 can detect the anomaly.

### [6-3. Modification Example 3]

For example, the inquiry data acquisition module 101 may acquire, as the inquiry data, message data relating to a message input by each of the plurality of users to the chat of the service. The chat may operate on the inquiry page P, or the chat may operate at a place different from the inquiry page P. An answer to the message of the user may be input by the operator, or may be generated by a model of machine learning (artificial intelligence). The chat itself may be one employed in a publicly-known service.

For example, when the server 10 in Modification Example 3 receives the message data from the user terminal 30, the server 10 stores this message data in the inquiry database DB. In Modification Example 3, a case in which the message data is stored for each totalization target period in the inquiry database DB is exemplified, but the message data may be stored in the inquiry database DB not particularly dependently on the totalization target period. In the data storage unit 100, answer data relating to an answer to the message of the user may be stored. It is assumed that, when the user inputs a plurality of messages one after another, the message data on each message is stored in the inquiry database DB.

The anomaly detection module 102 in Modification Example 3 detects the anomaly based on the message data. For example, the data storage unit 100 stores a dictionary database in which words relating to the anomaly are stored. The dictionary database may be the same as that in Modification example 2. The anomaly detection module 102 calculates, based on the message data, a hit count which is the number of hits to the words of the dictionary database. The anomaly detection module 102 may calculate the hit count for each totalization target period. The anomaly detection module 102 detects the anomaly when the hit count is equal to or larger than a threshold value. The anomaly detection module 102 does not detect the anomaly when the hit count is smaller than the threshold value.

The method for the anomaly detection module 102 to detect the anomaly based on the message data is not limited to the above-mentioned example. For example, the anomaly detection module 102 may not use the dictionary database, but may execute sentiment analysis on the message data, and may detect the anomaly based on an execution result of the sentiment analysis. The sentiment analysis itself may be a publicly-known method. The anomaly detection module 102 uses the sentiment analysis to calculate a negative message count being the number of negative messages. The anomaly detection module 102 detects the anomaly when the negative message count is equal to or larger than a threshold value. The anomaly detection module 102 does not detect the anomaly when the negative message count is smaller than the threshold value. As another example, the anomaly detection module 102 inputs the message data to a learning model which has learned a relationship between a message for training and presence or absence of the anomaly, and may detect the anomaly based on an estimation result obtained by the learning model.

The anomaly detection system 1 in Modification Example 3 acquires, as the inquiry data, the message data relating to the message input by each of the plurality of users to the chat of the service. The anomaly detection system 1 detects the anomaly based on the message data. The message input by the user directly reflects an opinion of the user, and hence the anomaly detection system 1 can use the message data to further increase the accuracy of the anomaly detection even when the anomaly that cannot be detected by a usual algorithm for anomaly detection occurs. For example, even when a message relating to an inquiry having content which is not prepared as the inquiry page P, the anomaly detection system 1 can detect the anomaly.

### [6-4. Modification Example 4]

For example, the inquiry data acquisition module 101 may acquire, as the inquiry data, sound data relating to sound that is generated by each of the plurality of users to a call center of the service. The inquiry to the call center may be made from the user terminal 30, or may be made by a telephone or the like other than the user terminal 30. The sound is content of a call between an operator of the call center and the user. The call center may respond to the inquiry of the user not through the operator, but through automated voice. The sound data may indicate the sound itself, or may indicate a text dictated by a program for dictation.

The server 10 in Modification Example 4 is communicably connected to a system of the call center via the network N. The system of the call center records the sound uttered by the user and generates the sound data. When the server 10 receives the sound data from the system of the call center, the server 10 stores this sound data in the inquiry database DB. In Modification Example 4, a case in which the sound data is stored for each totalization target period in the inquiry database DB is exemplified, but the sound data may be stored in the inquiry database DB not particularly dependently on the totalization target period. In the data storage unit 100, answer data relating to an answer of the operator to the inquiry of the user may be stored. It is assumed that, when the user makes a plurality of inquiries one after another, the sound data on each inquiry is stored in the inquiry database DB.

The anomaly detection module 102 in Modification Example 4 detects the anomaly based on the sound data. For example, the anomaly detection module 102 may convert, when the sound data indicates the sound itself, the sound indicated by the sound data to a text, and may then detect the anomaly. The data storage unit 100 stores a dictionary database in which words relating to the anomaly are stored. The dictionary database may be the same as that in Modification example 2. The anomaly detection module 102 calculates, based on the sound data, a hit count which is the number of hits to the words of the dictionary database. The anomaly detection module 102 may calculate the hit count for each totalization target period. The anomaly detection module 102 detects the anomaly when the hit count is equal to or larger than a threshold value. The anomaly detection module 102 does not detect the anomaly when the hit count is smaller than the threshold value.

The method for the anomaly detection module 102 to detect the anomaly based on the sound data is not limited to the above-mentioned example. For example, the anomaly detection module 102 may not use the dictionary database, but may execute sentiment analysis on the sound data, and may detect the anomaly based on an execution result of the sentiment analysis. The sentiment analysis itself may be a publicly-known method. The anomaly detection module 102 uses the sentiment analysis to calculate a negative word count being the number of negative words. The anomaly detection module 102 detects the anomaly when the negative word count is equal to or larger than a threshold value. The anomaly detection module 102 does not detect the anomaly when the negative word count is smaller than the threshold value. As another example, the anomaly detection module 102 inputs the sound data to a learning model which has learned a relationship between a message for training and presence or absence of the anomaly, and may detect the anomaly based on an estimation result obtained by the learning model.

The anomaly detection system 1 in Modification Example 4 acquires, as the inquiry data, the sound data relating to the sound that is generated by each of the plurality of users to the call center of the service. The anomaly detection system 1 detects the anomaly based on the sound data. The sound uttered by the user directly reflects an opinion of the user, and hence the anomaly detection system 1 can use the sound data to further increase the accuracy of the anomaly detection even when the anomaly that cannot be detected by a usual algorithm for anomaly detection occurs. For example, even when sound relating to an inquiry having content which is not prepared as the inquiry page P is uttered, the anomaly detection system 1 can detect the anomaly.

### [6-5. Modification Example 5]

For example, in the embodiment, the case in which one service is the target of the anomaly detection has been exemplified, but a plurality of services may be the target of the anomaly detection. The inquiry data acquisition module 101 in Modification Example 5 acquires the inquiry data on each of a plurality of services. The pieces of inquiry data on the plurality of services may have content different from one another. For example, the inquiry data on a certain service A may be the access situation data, and the inquiry data on a certain service B may be the sound data. The pieces of inquiry data on the plurality of services may be any combination.

For example, the server 10 may provide each of the plurality of services to the user. Another computer other than the server 10 may provide at least one of the plurality of services to the user. The server 10 may acquire the inquiry data from another computer. In the inquiry database DB in Modification Example 5, service identification information which allows identification of each of the plurality of services and the inquiry data on this service are stored in association with each other. The inquiry data on each service is stored not in one inquiry database DB, but may be stored in inquiry databases DB different from one another. The inquiries made to the plurality of services may integrally be received one contact point. In this case, the server 10 identifies the service to which the inquiry is made in accordance with the content of the inquiry.

The anomaly detection system 1 includes the inquiry-relevant service identification module 103. The inquiry-relevant service identification module 103 identifies an inquiry-relevant service relevant to the inquiry content indicated by the inquiry data based on the inquiry data on each of the plurality of services and a dictionary database in which words specific to each of the plurality of services are registered. In Modification Example 5, a case in which the inquiry content indicated by the inquiry data is a character string (text) is described, but the inquiry content may be sound.

The inquiry-relevant service identification module 103 identifies, for the inquiry data, at least one inquiry-relevant service. The inquiry-relevant service identification module 103 sometimes identifies, for the inquiry data, a plurality of inquiry-relevant services. In the inquiry data, there exists inquiry data irrelevant to the service being the target of the anomaly detection, and hence the inquiry-relevant service identification module 103 sometimes does not identify, for the inquiry data, the inquiry-relevant service.

For example, for each service, a determination criterion used to determine whether or not the inquiry content relates to this service is provided. The inquiry-relevant service identification module 103 determines whether or not the inquiry data satisfies the determination criterion of each of the plurality of services. The inquiry-relevant service identification module 103 determines whether or not the inquiry data satisfies the determination criterion. When a service the inquiry determination criterion of which is satisfied by the inquiry data exists, the inquiry-relevant service identification module 103 identifies this service as the inquiry-relevant service. When a service the inquiry determination criterion of which is satisfied by the inquiry data does not exist, the inquiry data does not relate to the service being the target of the anomaly detection, and hence the inquiry-relevant service identification module 103 does not identify the inquiry-relevant service.

It is only required that the determination criterion be a criterion with which the determination can be made based on the content (for example, text, image, or moving image) of the inquiry. The determination criterion may be any criterion. Whether or not the inquiry content includes the word in the dictionary database is an example of the determination criterion. In this embodiment, the inquiry-relevant service identification module 103 identifies, based on each of the plurality of pieces of inquiry data and the dictionary database in which the words specific to each of the plurality of services are registered, the inquiry-relevant service of this piece of inquiry data. The inquiry-relevant service identification module 103 determines whether or not the word stored in the dictionary database of each of the plurality of services is included in the inquiry data.

For example, when the inquiry data includes a word stored in the dictionary database of a certain service, the inquiry-relevant service identification module 103 identifies, as the inquiry-relevant service, the service corresponding to the dictionary database in which this word is stored. When the inquiry data includes "n" ("n" is an integer of two or more) or more words stored in the dictionary database of a certain service, the inquiry-relevant service identification module 103 may identify, as the inquiry-relevant service, the service corresponding to the dictionary database in which those words are stored. The inquiry-relevant service identification module 103 may identify, as the inquiry-relevant service, a service the dictionary database of which stores a relatively large number of words included in the inquiry data out of the plurality of services.

The determination criterion may be another criterion other than the dictionary database. The inquiry-relevant service identification module 103 may identify the inquiry-relevant service based on another determination criterion other than the dictionary database. For example, the determination criterion is not required to be the state in which the inquiry data includes the word stored in the dictionary database in which the plurality of words are stored, but may be a state in which the inquiry data simply indicates the service name. In this case, the inquiry-relevant service identification module 103 identifies, as the inquiry-relevant service, the service having the service name indicated by the inquiry data. For example, when the inquiry data includes an image or a moving image, the inquiry-relevant service identification module 103 may execute image analysis for the image or the moving image included in the inquiry data, to thereby identify the inquiry-relevant service. This image analysis may be any method such as optical character recognition or pattern matching, or the like.

For example, the determination criterion may be output of a learning model using a method of machine learning. The method of machine learning may be publicly-known various methods. For example, the learning model may be generated through any one of supervised learning, semi-supervised learning, and unsupervised learning. The learning model may be a model used in natural language processing or image analysis. The learning model has learned training data including inquiry data for training and a label indicating at least one of the plurality of services. The inquiry-relevant service identification module 103 inputs the inquiry data to the learning model. The learning model calculates a feature amount of the inquiry data, and outputs a label corresponding to this feature amount. The inquiry-relevant service identification module 103 may identify the service indicated by the label as the inquiry-relevant service.

The anomaly detection module 102 in Modification Example 5 detects the anomaly based further on the inquiry-relevant service. For example, when the access situation data described in the embodiment is the inquiry data, the anomaly detection module 102 increases the number of accesses of the service identified as the inquiry-relevant service. That is, the anomaly detection module 102 increases the number of accesses to the inquiry page P for each service. The anomaly detection module 102 detects, based on the number of accesses of each of the plurality of services, the anomaly of this service. For example, the anomaly detection module 102 detects the anomaly of a service that has the number of accesses becoming equal to or larger than a threshold value out of the plurality of services. As in the embodiment, the anomaly detection module 102 may detect the anomaly of a service that has a change amount of the number of accesses becoming equal to or larger than a threshold value out of the plurality of services. Also in Modification Example 5, the inquiry data (for example, the inquiry data described in Modification Example 1 to Modification Example 4) other than the access situation data described in the embodiment may be used.

The anomaly detection system 1 in Modification Example 5 acquires the inquiry data on each of a plurality of services. The anomaly detection system 1 identifies the inquiry-relevant service relevant to the inquiry content indicated by the inquiry data based on the inquiry data on each of the plurality of services and the dictionary database in which words specific to each of the plurality of services are registered. The anomaly detection system 1 detects the anomaly based further on the inquiry-relevant service. The anomaly detection system 1 can appropriately detect the anomaly relating to not only one certain service, but each of the plurality of services. For example, when an anomaly occurs in any one of the plurality of services, and even when an anomaly is not detected in the index such as a CPU usage rate of the server computer used for this service, a user who actually uses the service sometimes feels a sense of discomfort. The user sometimes makes an inquiry to the service in real time, and hence the anomaly detection system 1 can quickly detect the anomaly by analyzing such an inquiry.

### [6-6. Modification Example 6]

For example, when the anomaly detection system 1 handles the anomaly detection of each of the plurality of services, the inquiry data acquisition module 101 acquires the inquiry data on each of the plurality of services. This point is the same as Modification Example 5. The anomaly detection system 1 in Modification Example 6 includes the inquiry count acquisition module 104. The inquiry count acquisition module 104 acquires an inquiry count, which is the number of inquiries of each of the plurality of services. The number of accesses described in the embodiment is an example of the inquiry count. The number of messages in the chat in Modification Example 3 and the number of pieces of sound in Modification Example 4 are also examples of the inquiry count.

For example, the anomaly detection module 102 in Modification Example 6 detects the anomaly relating to a configuration specific to a service that has a relatively large inquiry count out of the plurality of services. The specific configuration is a configuration (for example, hardware or software) used only in a certain service. For example, the configuration specific to the certain service is a server computer which the user accesses in order to use this service, software installed on this server computer, another computer cooperating with this server computer, or software installed on the user terminal 30. The anomaly detection module 102 detects, when the inquiry count of only a specific service of the plurality of services is equal to or larger than the threshold value, the anomaly relating to the configuration specific to this specific service. The anomaly detection module 102 notifies the administrator of the detection of the anomaly of the specific configuration.

The anomaly detection system 1 in Modification Example 6 acquires the inquiry data on each of the plurality of services. The anomaly detection system 1 acquires an inquiry count being the number of inquiries of each of the plurality of services. The anomaly detection system 1 detects the anomaly relating to the configuration specific to the service having a relatively large inquiry count out of the plurality of services. With this configuration, the anomaly detection system 1 can detect the occurrence of the anomaly in the configuration specific to a certain specific service, and hence a cause of the anomaly can accurately be estimated. As a result, the service in which the anomaly has occurred can earlier be recovered.

### [6-7. Modification Example 7]

For example, the inquiry count of a specific service does not increase as in Modification Example 6, but inquiry counts of the plurality of services sometimes uniformly increase. In this case, the anomaly of a configuration common to the plurality of services may be detected. The inquiry data acquisition module 101 in Modification Example 7 is the same as that in Modification Example 6. The anomaly detection system 1 in Modification Example 7 includes the inquiry count acquisition module 104 described in Modification Example 6.

The anomaly detection module 102 in Modification Example 7 detects, when each of a plurality of services has the inquiry count equal to or larger than the threshold value, the anomaly relating to a configuration common to the plurality of services. The configuration common to the plurality of services is a configuration (for example, hardware or software) used not only in a specific service but in each of the plurality of services. For example, the configuration common to the plurality of services is another computer cooperating with the server computer of each of the plurality of services, software installed on this another computer, a computer cooperating with this another computer, or software installed on the user terminal 30 and common to the plurality of services (for example, so-called "super app"). The anomaly detection module 102 detects, when the plurality of services uniformly have the inquiry counts each equal to or larger than the threshold value, the anomaly relating to a configuration common to the plurality of services. The anomaly detection module 102 notifies the administrator of the detection of the anomaly of the common configuration.

The anomaly detection system 1 in Modification Example 7 acquires the inquiry data on each of the plurality of services. The anomaly detection system 1 acquires an inquiry count being the number of inquiries of each of the plurality of services. The anomaly detection system 1 detects the anomaly relating to the configuration common to the plurality of services when the inquiry count of each of the plurality of services is equal to or larger than the threshold value. The anomaly detection system 1 can detect the occurrence of the anomaly in the configuration common to the plurality of services, and hence a cause of the anomaly can accurately be estimated. As a result, each of the plurality of services in which the anomaly has occurred can earlier be recovered.

### [6-8. Modification Example 8]

For example, the anomaly detection system 1 may use not only the inquiry data, but also state data relating to a state of various devices such as the communication device 20 or the like, to thereby detect the anomaly. The anomaly detection system 1 in Modification Example 8 includes the state data acquisition module 105. The state data acquisition module 105 acquires state data relating to a state of a device used in the service. The device is a type of the hardware described in the embodiment. For example, the device may be a server computer, a personal computer, a tablet computer, a smartphone, another computer, a memory, or a power supply, in addition to the communication device 20.

The state data may indicate a pinpoint state of a device at a certain time point, but in Modification Example 2, it is assumed that the state data is data relating to a time-series change in the state of the device. The state of the device is also considered as a load on a device which provides the service. The state of the device may mean a hardware state, or may mean a software state. For example, the state of the device may be a communication amount, a CPU usage amount, a memory usage amount, a power consumption amount, a communication speed, a temperature, or a combination thereof. The state of the device may be an index called golden signal metrics, or another index used in a publicly-known benchmark test. An acquisition method for the state data on the device may also be a publicly-known method.

The data storage unit 100 in Modification Example 8 stores the state data acquired from a device such as the communication device 20 . The state data acquisition module 105 acquires the state data stored in the data storage unit 100. The state data acquisition module 105 may acquire the state data from the system of each of the plurality of services. For example, the state data acquisition module 105 periodically requests the state data from the system of each of the plurality of services. Each system transmits to the server 10 the newest state data in response to the request. The state data acquisition module 105 periodically acquires the newest state data from each system.

The anomaly detection module 102 in Modification Example 8 detects the anomaly based further on the state data. For example, the anomaly detection module 102 detects the anomaly when a numerical value indicated by the state data is equal to or larger than a threshold value. The anomaly detection module 102 may detect the anomaly when a change amount of the numerical value indicated by the state data is equal to or larger than a threshold value. The anomaly detection module 102 may input, to a model generated through use of a method of machine learning, the time-series change in state data, to thereby detect the anomaly.

For example, the anomaly detection module 102 may determine that an anomaly has occurred when the anomaly is detected through both of the anomaly detection method based on the inquiry data described in the embodiment and the anomaly detection method based on the state data described in Modification Example 8. The anomaly detection module 102 may determine that an anomaly has occurred when the anomaly is detected through any one of the anomaly detection method based on the inquiry data described in the embodiment or the anomaly detection method based on the state data described in Modification Example 8. It is assumed that information indicating the service to which the device being the source of the acquisition of the state data belongs is stored in the data storage unit 100. The anomaly detection module 102 may detect, in a case in which the numerical value indicated by a certain piece of state data becomes equal to or larger than a threshold value or the like, the anomaly of the service associated with this state data.

The anomaly detection system 1 in Modification Example 8 acquires the state data relating to the state of the device used in the service. The anomaly detection system 1 detects the anomaly based further on the state data. The anomaly detection system 1 can increase the accuracy of the detection of the anomaly by using both of the inquiry data and the state data on the device.

### [6-9. Modification Example 9]

For example, various devices exist as devices used to provide the services. Among the state data in Modification Example 8, some state data relates to the anomaly and other state data does not closely relate to the anomaly. Thus, the server 10 may identify the state data relevant to the inquiry data from various types of state data. This state data is hereinafter referred to as "relevant data." The server 10 may detect the anomaly based on the relevant data out of the plurality of pieces of state data. It is assumed that the state data other than the relevant data is not used for the anomaly detection.

The anomaly detection system 1 in Modification Example 9 includes the relevance identification module 106. The relevance identification module 106 identifies the state data relevant to the inquiry data from the plurality of pieces of state data. The relevance identification module 106 identifies relevant data relevant to the inquiry data from the plurality of pieces of state data. The relevance is a correlation with the inquiry data. For example, in a case in which, when an increase amount of the inquiry data becomes equal to or larger than a threshold value, an increase amount of the state data also becomes equal to or larger than a threshold value, the inquiry data and the state data have the relevance. In a case in which, when a decrease amount of the inquiry data becomes equal to or larger than a threshold value, a decrease amount of the state data also becomes equal to or larger than a threshold value, the inquiry data and the state data have the relevance.

For example, in a case in which a time difference between a timing of a change in the inquiry data and a timing of a change in the state data is smaller than a threshold value, the inquiry data and the state data have the relevance. In a case in which the time difference between the timing of the change in the inquiry data and the timing of the change in the state data steadily falls within a predetermined range, the inquiry data and the state data have the relevance. For example, the relevance identification module 106 calculates, for each service, the time-series change in the inquiry count based on each of the plurality of pieces of inquiry data. This calculation method is as described in the embodiment.

For example, the relevance identification module 106 executes, based on a publicly-known clustering method, clustering of the time-series change in the inquiry count in each of the plurality of services and the time-series change in the state indicated by each of the plurality of pieces of state data. The clustering can be executed based on a publicly-known method. For example, the relevance identification module 106 executes the clustering based on k-means clustering, hierarchical clustering, DBSCAN clustering, or another clustering method. The relevance identification module 106 executes the clustering such that time-series changes similar to each other belong to the same cluster. The relevance identification module 106 identifies the state data that belongs to the same cluster as that of the time-series change in the inquiry count of a certain service out of the plurality of pieces of state data as the relevant data relevant to the inquiry data in this service.

The anomaly detection module 102 in Modification Example 9 detects the anomaly based on the state data having relevance out of the plurality of pieces of state data. The anomaly detection module 102 does not refer to, in the detection of the anomaly, the state data that is not the relevant data out of the plurality of pieces of state data. The anomaly detection module 102 is different from the anomaly detection module 102 in Modification Example 8 in the point that the state data identified as the relevant data out of the plurality of pieces of state data is used for the anomaly detection, but is the same as the anomaly detection module 102 in Modification Example 8 in other points.

The anomaly detection system 1 in Modification Example 9 identifies the state data relevant to the inquiry data out of the plurality of pieces of state data. The anomaly detection system 1 detects the anomaly based on the state data having relevance out of the plurality of pieces of state data. The anomaly detection system 1 can increase the accuracy of the detection of the anomaly by detecting the anomaly based on the state data relevant to the inquiry data.

### [6-10. Modification Example 10]

For example, as in Modification Example 2 to Modification Example 4, when the user inputs the content of the inquiry, the inquiry data sometimes includes a word which is high in specialty and directly expresses the anomaly, such as "traffic," "access," or "system failure." Such inquiry data is considered to be particularly effective for the detection of the anomaly. Thus, the server 10 may consider the inquiry data including the word high in specialty more than other inquiry data, to thereby detect the anomaly.

The anomaly detection system 1 in Modification Example 10 includes the specialty information acquisition module 107. The specialty information acquisition module 107 acquires specialty information relating to specialty of a word included in each of the plurality of pieces of inquiry data. The specialty information indicates a degree of specialty of a word. In Modification Example 10, a case in which the specialty information is expressed as a numerical value is exemplified, but the specialty information may be expressed as a character or a symbol. In Modification Example 10, a higher numerical value indicated by the specialty information means higher specialty. The specialty information on the word may be stored in the dictionary database described in Modification Example 2 or the like, or may be stored in another database different from the dictionary database.

The anomaly detection module 102 in Modification Example 10 detects the anomaly based further on the specialty information on each of the plurality of pieces of inquiry data. For example, when certain inquiry data includes a word associated with the specialty information, the anomaly detection module 102 increases the index for the anomaly detection based on the specialty indicated by the specialty information associated with this word. The anomaly detection module 102 calculates the index for the anomaly detection such that the index for the anomaly detection increases more as the specialty indicated by the specialty information is higher. In Modification Example 2 or the like, the case in which the index for the anomaly detection increases by one regardless of content of certain inquiry data has been exemplified, but, in Modification Example 10, when the specialty indicated by the specialty information is high, the index for the anomaly detection increases by a numerical value equal to or larger than 2 for one piece of inquiry data.

For example, it is assumed that the specialty indicated by the specialty information has three levels. When a word at the level 3 of the specialty is included in the inquiry data, the anomaly detection module 102 increases the index for the anomaly detection by three for one piece of inquiry data. When a word at the level 2 of the specialty is included in the inquiry data, the anomaly detection module 102 increases the index for the anomaly detection by two for one piece of inquiry data. When a word at the level 1 of the specialty is included in the inquiry data, the anomaly detection module 102 increases the index for the anomaly detection by one for one piece of inquiry data.

The anomaly detection system 1 in Modification Example 10 acquires the specialty information relating to the specialty of a word included in each of the plurality of pieces of inquiry data. The anomaly detection system 1 detects the anomaly based on the specialty information on each of the plurality of pieces of inquiry data. With this configuration, the anomaly detection system 1 can detect the anomaly by more considering the inquiry data including a word having a higher specialty, and hence the accuracy of the anomaly detection increases.

### [6-11. Modification Example 11]

For example, in a case in which a campaign for a certain service is held, the number of inquiries sometimes increases even when an anomaly does not occur in this service. In this case, such inquiries possibly form noise in the anomaly detection. Thus, the server 10 may change the determination criterion for the anomaly detection in consideration of whether or not the campaign is held.

The anomaly detection system 1 in Modification Example 11 includes the campaign information acquisition module 108. The campaign information acquisition module 108 acquires campaign information relating to a campaign in the service. The campaign information indicates identification information on the service for which a campaign is held and a period in which the campaign is held. The campaign information may indicate content of the campaign. It is assumed that the campaign information is stored in the data storage unit 100. The campaign information may be registered in the data storage unit 100 by the administrator, or may be registered in the data storage unit 100 by another person.

The anomaly detection module 102 in Modification Example 11 detects the anomaly based further on the campaign information. For example, the anomaly detection module 102 determines, based on the campaign information, whether or not a campaign is held in the service being the target of the anomaly detection. The anomaly detection module 102 increases the threshold value for the detection of the anomaly of the service for which it is determined that the campaign is held. The anomaly detection module 102 detects the anomaly based on the increased threshold value in a period of the campaign. Modification Example 11 is different from the embodiment in a determination method for the threshold value, but is the same as the embodiment in other points.

The anomaly detection system 1 in Modification Example 11 acquires the campaign information relating to the campaign in the service. The anomaly detection system 1 detects the anomaly based further on the campaign information. With this configuration, the anomaly detection system 1 can achieve the anomaly detection in consideration of noise that may occur as a result of the campaign being held, and hence the anomaly can appropriately be detected even when the campaign is held.

### [6-12. Modification Example 12]

For example, the service being the target of the anomaly detection is sometimes featured in a television program, a video distribution on the Internet, or a distribution service such as a live distribution. In this case, even when the anomaly does not occur in this service, the number of inquiries sometimes increases. In this case, such inquiries possibly form noise in the anomaly detection. Thus, the server 10 may change the determination criterion for the anomaly detection in consideration of the distribution content in the distribution service.

The anomaly detection system 1 in Modification Example 12 includes the distribution content information acquisition module 109. The distribution content information acquisition module 109 acquires distribution content information relating to the distribution content in a distribution service for distributing information relating to the service. The distribution content information indicates distribution date and time in the distribution service and distribution content in the distribution service. It is assumed that the distribution content information is stored in the data storage unit 100. The distribution content information may be registered in the data storage unit 100 by the administrator, or may be registered in the data storage unit 100 by another person. In Modification Example 12, the distribution content information indicates whether or not the content relates to the service being the target of the anomaly detection.

The anomaly detection module 102 in Modification Example 12 detects the anomaly based on the distribution content information. For example, the anomaly detection module 102 determines, based on the distribution content information, whether or not the service being the target of the anomaly detection is featured in the distribution service. When the service being the target of the anomaly detection is determined to be featured in the distribution service, the anomaly detection module 102 increases the threshold value for detecting the anomaly of the service. The anomaly detection module 102 detects the anomaly based on the increased threshold value in a distribution period or periods before and after this period. Modification Example 12 is different from the embodiment in a determination method for the threshold value, but is the same as the embodiment in other points.

The anomaly detection system 1 in Modification Example 12 acquires the distribution content information relating to the distribution content in the distribution service for distributing information relating to the service. The anomaly detection system 1 detects the anomaly based on the distribution content information. With this configuration, the anomaly detection system 1 can achieve the anomaly detection in consideration of noise that may occur as a result of the distribution in the distribution service, and hence the anomaly can appropriately be detected even when the distribution in the distribution service is executed.

### [6-13. Other Modification Examples]

For example, the above-mentioned modification examples may be combined with one another.

For example, in the embodiment, the case in which the main processing is executed in the server 10 has been described, but the processing described as the processing executed in the server 10 may be executed in the administrator terminal 40 or another computer. The processing described as the processing executed in the server 10 may be distributed to a plurality of computers.

For example, when the inquiry-relevant service identification module 103 cannot identify a service, the inquiry-relevant service identification module 103 may identify, for example, based on a post time, operation information indicating a service provision situation on a service side and the like, maintenance information indicating a time period in which the service is unavailable on the service side and the like, promotion information indicating an advertisement activity such as an advertisement and news on the service side indicating a time period in which a service is planned to be provided, or system alert information on the service side, when, for example, the time at which an inquiry is made matches the operation time (service provision time) on the service side, this post as an inquiry relevant to this service.

### [7. Supplementary Notes]

For example, the anomaly detection system may have the following configurations.
(1) An anomaly detection system, including:
   an inquiry data acquisition module configured to acquire inquiry data relating to an inquiry made by each of a plurality of users who use a service; and
   an anomaly detection module configured to detect an anomaly relating to the service based on the inquiry data.
(2) The anomaly detection system according to Item (1),
   wherein the inquiry data acquisition module is configured to acquire, as the inquiry data, access situation data relating to an access situation of each of the plurality of users to an inquiry page of the service, and
   wherein the anomaly detection module is configured to detect the anomaly based on the access situation data.
(3) The anomaly detection system according to Item (2), wherein the inquiry data acquisition module is configured to acquire the access situation data relating to the access situation to a page provision server that is a server different from a service provision server that provides the service to each of the plurality of users, and provides the inquiry page to each of the plurality of users.
(4) The anomaly detection system according to Item (2) or (3),
   wherein the inquiry data acquisition module is configured to acquire the access situation data on each of a plurality of the inquiry pages, and
   wherein the anomaly detection module is configured to calculate an index relating to anomaly detection based on the access situation data on each of the plurality of the inquiry pages and a calculation expression in which a coefficient for an inquiry page relatively relevant to the anomaly detection is higher than a coefficient for an inquiry page relatively irrelevant to the anomaly detection, and to detect the anomaly based on the index.
(5) The anomaly detection system according to any one of Items (1) to (4),
   wherein the inquiry data acquisition module is configured to acquire, as the inquiry data, keyword data relating to a keyword input by each of the plurality of users in a search on an inquiry page of the service, and
   wherein the anomaly detection module is configured to detect the anomaly based on the keyword data.
(6) The anomaly detection system according to any one of Items (1) to (5),
   wherein the inquiry data acquisition module is configured to acquire, as the inquiry data, message data relating to a message input by each of the plurality of users to a chat of the service, and
   wherein the anomaly detection module is configured to detect the anomaly based on the message data.
(7) The anomaly detection system according to any one of Items (1) to (6),
   wherein the inquiry data acquisition module is configured to acquire, as the inquiry data, sound data relating to sound that is generated by each of the plurality of users to a call center of the service, and
   wherein the anomaly detection module is configured to detect the anomaly based on the sound data.
(8) The anomaly detection system according to any one of Items (1) to (7),
   wherein the inquiry data acquisition module is configured to acquire the inquiry data on each of a plurality of the services,
   wherein the anomaly detection system further includes an inquiry-relevant service identification module configured to identify an inquiry-relevant service relevant to inquiry content indicated by the inquiry data based on the inquiry data on each of the plurality of the services and a dictionary database in which a word specific to each of the plurality of the services is registered, and
   wherein the anomaly detection module is configured to detect the anomaly based further on the inquiry-relevant service.
(9) The anomaly detection system according to any one of Items (1) to (8),
   wherein the inquiry data acquisition module is configured to acquire the inquiry data on each of a plurality of the services,
   wherein the anomaly detection system further includes an inquiry count acquisition module configured to acquire an inquiry count being the number of inquiries of each of the plurality of the services, and
   wherein the anomaly detection module is configured to detect the anomaly relating to a configuration specific to a service having a relatively large inquiry count out of the plurality of the services.
(10) The anomaly detection system according to any one of Items (1) to (9),
   wherein the inquiry data acquisition module is configured to acquire the inquiry data on each of a plurality of the services,
   wherein the anomaly detection system further includes an inquiry count acquisition module configured to acquire an inquiry count being the number of inquiries of each of the plurality of the services, and
   wherein the anomaly detection module is configured to detect the anomaly relating to a configuration common to the plurality of the services when the inquiry count of each of the plurality of the services is equal to or larger than a threshold value.
(11) The anomaly detection system according to any one of Items (1) to (10), further including a state data acquisition module configured to acquire state data relating to a state of a device used in the service,
   wherein the anomaly detection module is configured to detect the anomaly based further on the state data.
(12) The anomaly detection system according to Item (11), further including a relevance identification module configured to identify a piece of state data relevant to the inquiry data from a plurality of pieces of the state data,
   wherein the anomaly detection module is configured to detect the anomaly based on the piece of state data having the relevance out of the plurality of pieces of the state data.
(13) The anomaly detection system according to any one of Items (1) to (12), further including a specialty information acquisition module configured to acquire specialty information relating to specialty of a word included in each of a plurality of pieces of the inquiry data,
   wherein the anomaly detection module is configured to detect the anomaly based on the specialty information on each of the plurality of pieces of the inquiry data.
(14) The anomaly detection system according to any one of Items (1) to (13), further including a campaign information acquisition module configured to acquire campaign information relating to a campaign in the service,
   wherein the anomaly detection module is configured to detect the anomaly based further on the campaign information.
(15) The anomaly detection system according to any one of Items (1) to (14), further including a distribution content information acquisition module configured to acquire distribution content information relating to distribution content in a distribution service for distributing information relating to the service,
   wherein the anomaly detection module is configured to detect the anomaly based further on the distribution content information.

## Claims

1. An anomaly detection system, comprising:
an inquiry data acquisition module configured to acquire inquiry data relating to an inquiry made by each of a plurality of users who use a service; and
an anomaly detection module configured to detect an anomaly relating to the service based on the inquiry data.

2. The anomaly detection system according to claim 1,
wherein the inquiry data acquisition module is configured to acquire, as the inquiry data, access situation data relating to an access situation of each of the plurality of users to an inquiry page of the service, and
wherein the anomaly detection module is configured to detect the anomaly based on the access situation data.

3. The anomaly detection system according to claim 2, wherein the inquiry data acquisition module is configured to acquire the access situation data relating to the access situation to a page provision server that is a server different from a service provision server that provides the service to each of the plurality of users, and provides the inquiry page to each of the plurality of users.

4. The anomaly detection system according to claim 2 or 3,
wherein the inquiry data acquisition module is configured to acquire the access situation data on each of a plurality of the inquiry pages, and
wherein the anomaly detection module is configured to calculate an index relating to anomaly detection based on the access situation data on each of the plurality of the inquiry pages and a calculation expression in which a coefficient for an inquiry page relatively relevant to the anomaly detection is higher than a coefficient for an inquiry page relatively irrelevant to the anomaly detection, and to detect the anomaly based on the index.

5. The anomaly detection system according to any one of claims 1 to 3,
wherein the inquiry data acquisition module is configured to acquire, as the inquiry data, keyword data relating to a keyword input by each of the plurality of users in a search on an inquiry page of the service, and
wherein the anomaly detection module is configured to detect the anomaly based on the keyword data.

6. The anomaly detection system according to any one of claims 1 to 3,
wherein the inquiry data acquisition module is configured to acquire, as the inquiry data, message data relating to a message input by each of the plurality of users to a chat of the service, and
wherein the anomaly detection module is configured to detect the anomaly based on the message data.

7. The anomaly detection system according to any one of claims 1 to 3,
wherein the inquiry data acquisition module is configured to acquire, as the inquiry data, sound data relating to sound that is generated by each of the plurality of users to a call center of the service, and
wherein the anomaly detection module is configured to detect the anomaly based on the sound data.

8. The anomaly detection system according to any one of claims 1 to 3,
wherein the inquiry data acquisition module is configured to acquire the inquiry data on each of a plurality of the services,
wherein the anomaly detection system further comprises an inquiry-relevant service identification module configured to identify an inquiry-relevant service relevant to inquiry content indicated by the inquiry data based on the inquiry data on each of the plurality of the services and a dictionary database in which a word specific to each of the plurality of the services is registered, and
wherein the anomaly detection module is configured to detect the anomaly based further on the inquiry-relevant service.

9. The anomaly detection system according to any one of claims 1 to 3,
wherein the inquiry data acquisition module is configured to acquire the inquiry data on each of a plurality of the services,
wherein the anomaly detection system further comprises an inquiry count acquisition module configured to acquire an inquiry count being the number of inquiries of each of the plurality of the services, and
wherein the anomaly detection module is configured to detect the anomaly relating to a configuration specific to a service having a relatively large inquiry count out of the plurality of the services.

10. The anomaly detection system according to any one of claims 1 to 3,
wherein the inquiry data acquisition module is configured to acquire the inquiry data on each of a plurality of the services,
wherein the anomaly detection system further comprises an inquiry count acquisition module configured to acquire an inquiry count being the number of inquiries of each of the plurality of the services, and
wherein the anomaly detection module is configured to detect the anomaly relating to a configuration common to the plurality of the services when the inquiry count of each of the plurality of the services is equal to or larger than a threshold value.

11. The anomaly detection system according to any one of claims 1 to 3, further comprising a state data acquisition module configured to acquire state data relating to a state of a device used in the service,
wherein the anomaly detection module is configured to detect the anomaly based further on the state data.

12. The anomaly detection system according to claim 11, further comprising a relevance identification module configured to identify a piece of state data relevant to the inquiry data from a plurality of pieces of the state data,
wherein the anomaly detection module is configured to detect the anomaly based on the piece of state data having the relevance out of the plurality of pieces of the state data.

13. The anomaly detection system according to any one of claims 1 to 3, further comprising a specialty information acquisition module configured to acquire specialty information relating to specialty of a word included in each of a plurality of pieces of the inquiry data,
wherein the anomaly detection module is configured to detect the anomaly based on the specialty information on each of the plurality of pieces of the inquiry data.

14. The anomaly detection system according to any one of claims 1 to 3, further comprising a campaign information acquisition module configured to acquire campaign information relating to a campaign in the service,
wherein the anomaly detection module is configured to detect the anomaly based further on the campaign information.

15. The anomaly detection system according to any one of claims 1 to 3, further comprising a distribution content information acquisition module configured to acquire distribution content information relating to distribution content in a distribution service for distributing information relating to the service,
wherein the anomaly detection module is configured to detect the anomaly based further on the distribution content information.

16. An anomaly detection method, comprising:
an inquiry data acquisition step of acquiring inquiry data relating to an inquiry made by each of a plurality of users who use a service; and
an anomaly detection step of detecting an anomaly relating to the service based on the inquiry data.

17. A program for causing a computer to function as:
an inquiry data acquisition module configured to acquire inquiry data relating to an inquiry made by each of a plurality of users who use a service; and
an anomaly detection module configured to detect an anomaly relating to the service based on the inquiry data.
